# EUROPÄISCHE PATENTANMELDUNG

(11) **EP 1 160 125 A2**
(43) Veröffentlichungstag der Anmeldung: **05.12.2001**
(21) Anmeldenummer: 01110730.7
(22) Anmeldetag: 03.05.2001
(51) Int. Cl.: B60N 3/00

(54) **Klapptischanordnung für Fahrzeuge**

(30) Priorität: 27.05.2000 DE 10026561
(71) Anmelder: DaimlerChrysler AG, 70567 Stuttgart (DE)
(72) Erfinder: Dürr, Bernhard, 75365 Calw-Stammheim (DE); Emhardt, Frank, 70569 Stuttgart (DE); Gaus, Hermann, Prof., 70619 Stuttgart (DE); Geisel, Thomas, 72108 Rottenburg (DE); Leucht, Rainer, 73666 Baltmannsweiler (DE); Schrom, Ralf-Henning, 72108 Rottenburg (DE); Tiefenbacher, Rainer, 71144 Steinenbonn (DE)

(57) **Zusammenfassung**

Die Erfindung betrifft eine Klapptischanordnung für Fahrzeuge die einem Fahrzeugsitz zugeordnet ist, mit der Unterbringung einer mindestens eine Tischplatte umfassenden Plattenanordnung in einem seitlich neben dem Fahrzeugsitz angeordneten Aufnahmegehäuse. Jede Tischplatte der Plattenanordnung ist dabei nach oben herausziehbar und in eine etwa horizontale Gebrauchsstellung herunterklappbar, in der die Plattenanordnung durch Stützmittel von dem Aufnahmegehäuse gehalten ist. Die Plattenanordnung samt ihrer sie mit dem Aufnahmegehäuse verbindenden Anlenkachse ist zwischen ihrer herausgezogenen und ihrer eingeschobenen Stellung in einem Führungsschacht des Aufnahmegehäuses schiebegeführt. Erfindungsgemäß ist die mitbewegte Anlenkachse der Plattenanordnung an einem im Führungsschacht des Aufnahmegehäuses laufenden Führungsschlitten befestigt, der in der Gebrauchsstellung der Plattenanordnung bis in eine obere Endlage im Führungsschacht verschoben ist.

## Beschreibung

Die Erfindung betrifft eine Klapptischanordnung für Fahrzeuge, insbesondere für Kraftwagen, gemäß dem Oberbegriff des Patentanspruchs 1.

Aus der EP 0 350 897 A2 ist bereits eine Klapptischanordnung bekannt, bei der zwei Tischplatten aus einem seitlich neben dem Fahrzeugsitz angeordneten Aufnahmegehäuse nach oben herausgezogen und in eine horizontale Gebrauchsstellung heruntergeklappt werden können. Für die Schiebeführung der Tischplatten im Aufnahmegehäuse ist eine Anlenkachse eines die Tischplatten miteinander verbindenden Scharnierbandes vorgesehen, die zusammen mit den Tischplatten versenkt wird und deren gegenüber dem Scharnierband überstehende Enden in an den vertikalen Schmalseiten des Aufnahmegehäuses angeordnete Führungsleisten eingreifen.
Die beiden Tischplatten liegen in ihrer Gebrauchsstellung mit ihrer Breitseite an der zugeordneten Schmalseite des Aufnahmegehäuses auf und werden über die Anlenkachse abgestützt. Als Gegenhalter zur Abstützung der überstehenden Enden der Anlenkachse in ihrer Position oberhalb des Aufnahmegehäuses stehen die Führungsleisten aus dem Aufnahmegehäuse heraus und sind an ihrem oberen Ende mit einer kuppelförmigen Abdeckung geschlossen.
Die erhabenen Abdeckungen der Führungsleisten überragen die Tischplatten in ihrer Gebrauchsstellung deutlich und können die Bewegungsfreiheit des Benutzers in unerwünschter Weise einschränken. Außerdem kann durch die erhabenen Abdeckungen bei Unfällen eine Erhöhung der Verletzungsgefahr für die Insassen des Fahrzeugs gegeben sein.

Der Erfindung liegt daher die Aufgabe zugrunde, eine Klapptischanordnung der gattungsgemäßen Art zu entwickeln, die eine komfortablere Nutzung und eine Verbesserung der Verletzungssicherheit bei Unfällen ermöglicht.

Diese Aufgabe wird erfindungsgemäß mit den Merkmalen des Patentanspruchs 1 gelöst.

Vorteilhafte Ausgestaltungen der Erfindung sind den übrigen Ansprüchen zu entnehmen.

Bei der Klapptischanordnung, die in Luft-, Wasser- oder Landfahrzeugen eingesetzt werden kann, muß lediglich für die obere Endlage des Führungsschlittens der Plattenanordnung ein Anschlag vorgesehen werden, der innerhalb des Aufnahmegehäuses angeordnet ist und somit nicht erhaben vom Aufnahmegehäuse absteht. Außerdem muß die Anlenkachse keine seitlich von der Plattenanordnung abstehenden Endbereiche aufweisen, wodurch die Eingriffsbreite der Plattenanordnung und damit auch die lichte Breite des Aufnahmeschachtes reduziert werden kann.

Gemäß einer besonders bevorzugten Ausführungsform wird die Anlenkachse durch zwei voneinander beabstandete Scharniere gebildet. Hierdurch ergeben sich gegenüber einem durchgehenden Scharnierband bei ausreichender Stabilität deutliche Gewichtsvorteile und der Montageaufwand kann verringert werden.

Um die Plattenanordnung ohne unerwünschte Vergrößerung der Plattenformate in eine mittig vor dem zugeordneten Sitz liegende Gebrauchsstellung bringen zu können, ist als seitlicher Auslegerarm eine Tragplatte vorgesehen, an der die Plattenanordnung zur individuellen Positionierung durch den Benutzer verschiebbar gelagert ist.

Damit eine besonders exakte Anpassung der Plattenposition an die Bedürfnisse des Benutzers möglich ist, kann die Plattenanordnung in Längsrichtung der Tragplatte und quer dazu stufenlos verschiebebeweglich gelagert sein. Damit ist eine ergonomisch günstige Position der Plattenanordnung für jeden Benutzer individuell einstellbar, da nahezu jeder Punkt in der Ebene "angefahren" werden kann.

Um das Aufnahmegehäuse trotz ausreichenden Plattenformates der Plattenanordnung kompakt gestalten zu können, wird vorteilhaft, eine zweiteilige Tischplatte für die einem Sitzplatz zugeordnete Plattenanordnung vorgesehen. Jede der Teilplatten kann somit an die Breite des Aufnahmegehäuses angepaßt sein. Die Verbindung der Tischplattenteile erfolgt an den langen Schmalseiten beispielsweise über Scharniere, so daß die zwei Teilplatten vorm Einschieben der Plattenanordnung in den Führungsschacht raumsparend aufeinandergeklappt werden können.

Neben der horizontalen Einstellmöglichkeit der Plattenanordnung kann diese z. B. für Schreibtätigkeiten oder dgl. zusätzlich neigungseinstellbar sein.

Auf technisch einfache Weise läßt sich die Neigungseinstellung der Plattenanordnung durch eine segmentartige Halteplatte ermöglichen, die schwenkbar am Führungsschlitten gelagert ist.

Damit der Freiraum für die Neigungseinstellung der Halteplatte oberhalb des Aufnahmeschachtes gegeben ist, kann der obere Endbereiches des Aufnahmegehäuses entsprechend der maximalen Neigung der Halteplatte abgeschrägt werden. Somit ist für die Neigungseinstellung im Aufnahmegehäuse kein zusätzlicher Bauraum notwendig.

Eine technisch besonders einfache Fixierung der Plattenanordnung in ihrer horizontalen Gebrauchsstellung läßt sich mit einem Haltebügel aus gebogenem Draht realisieren.

Für eine platzsparende Unterbringung des Klapptisches bei Nichtnutzung kann das Aufnahmegehäuse mit dem darin untergebrachten Klapptisch bis in eine abgesenkte Ablagestellung heruntergeklappt werden.
Durch Abstimmung einer quer zur Breitseite des Aufnahmegehäuses verlaufenden Schwenkachse auf die Sitzposition und die Abmessungen des Aufnahmegehäuses kann die nach oben gewandte Schmalseite bei heruntergeklapptem Aufnahmegehäuses in einer Position liegen, in der sie als Armauflage genutzt werden kann.

Falls dies gewünscht ist, kann die entsprechende Schmalseite des Aufnahmegehäuses ähnlich wie eine Armlehne eines Sitzes gepolstert sein.

Für eine weitere individuelle Einstellung der Klapptischanordnung insbesondere in Kombination mit der Neigungseinstellbarkeit der Plattenanordnung können in Gebrauchsstellung in einem begrenzten Einstellbereich mehrere Schwenkstellungen des Aufnahmegehäuses fest eingestellt werden. Die Ausgangsposition der Plattenanordnung kann somit benutzerfern oder benutzernah eingestellt werden.

Weitere Einzelheiten und vorteilhafte Ausgestaltungen der Erfindung werden im folgenden anhand der Zeichnung näher erläutert. Dabei zeigen:
- Fig. 1: eine Übersichtsdarstellung einer Klapptischanordnung neben einem Fahrzeugsitz in Gebrauchsstellung in perspektivischer Schrägansicht von der Seite,
- Fig. 2: die separate Klapptischanordnung gemäß Fig. 1 mit aufgebrochenem Aufnahmegehäuse,
- Fig. 3: die Plattenanordnung gemäß Fig. 2 in einer verschobenen Gebrauchsstellung,
- Fig. 4: die Abstützung einer Tragplatte der Plattenanordnung gemäß Fig. 3 sowie

- Fig. 5: eine Übersichtsdarstellung der Klapptischanordnung in zwei Gebrauchsstellungen

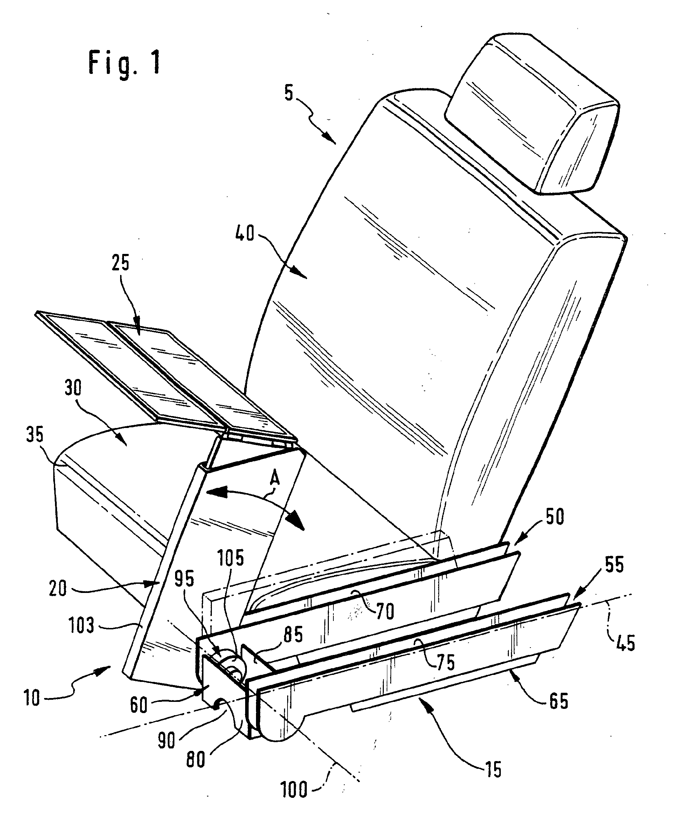

In Fig. 1 ist ein rechter Fondsitz 5 eines nicht dargestellten Kraftwagens mit einer Klapptischanordnung 10 dargestellt. Die dem Fondsitz 5 zugeordnete Klapptischanordnung 10 umfaßt dabei als Hauptteile einen Tragrahmen 15, ein Aufnahmegehäuse 20 sowie eine Plattenanordnung 25.
Bei dem Fondsitz 5 handelt es sich um einen in Fahrtrichtung weisenden Kraftwagensitz, der ein Sitzkissen 30 mit vorderer Sitzkante 35 sowie eine Sitzlehne 40 aufweist.

Der Tragrahmen 15 trägt das Aufnahmegehäuse 20 und ist bezüglich der Fahrzeugmittenachse 45 spiegelsymmetrisch aufgebaut, so daß er die entsprechenden Aufnahmegehäuse für zwei Klapptischanordnungen sowohl für den rechten als auch für den nicht dargestellten linken Fondsitz aufnehmen kann. Dazu weist der Tragrahmen 15 zwei in einem seitlichen Abstand etwa parallel zueinander angeordnete Kassetten 50 und 55 auf, die über einen Steg 60 und einen Boden 65 miteinander verbunden sind.
Die Kassetten 50 und 55 schließen mit ihren schmalen Längsseiten 70 und 75 etwas unterhalb des Sitzkissens 30 ab und erstrecken sich in ihrer Länge in etwa über die gesamte Sitzkissenlänge.
Der Steg 60 umfaßt zwei parallel zueinander angeordnete Platten 80 und 85, die für die Abstützung am Mitteltunnel eine entsprechende Aussparung 90 aufweisen.
Zwischen den zwei Platten 80 und 85 verläuft eine zur vorderen Sitzkante 35 in etwa parallele Schwenkachse 100, um das Aufnahmegehäuse 20 entsprechend des Pfeils A aus der liniert dargestellten, aufgerichteten Gebrauchsstellung in eine strichpunktiert angedeutete, etwa horizontal abgesenkte Ablagestellung und umgekehrt zu schwenken. In ihrer Ablagestellung kann die nach oben gewandte Schmalseite 103 des Aufnahmegehäuses 20 als Armauflage dienen.
Die geometrische Schwenkachse 100 durchsetzt eine Anlenkstelle 95 der Kassette 50, die mit einer Rasteinrichtung 105 ausgerüstet ist. Die Rasteinrichtung 105 wirkt mit einer drehfest mit dem Aufnahmegehäuse 20 verbundenen Achswelle zusammen, so daß für das Aufnahmegehäuse 20 in einem definierten Einstellbereich mehrere Schwenkstellungen fixiert werden können.
In gleicher Weise ist für den linken Fondsitz eine Anlenkstelle für dessen Aufnahmegehäuse vorgesehen, das aus Gründen der Spiegelsymmetrie nicht weiter ausgeführt werden muß.

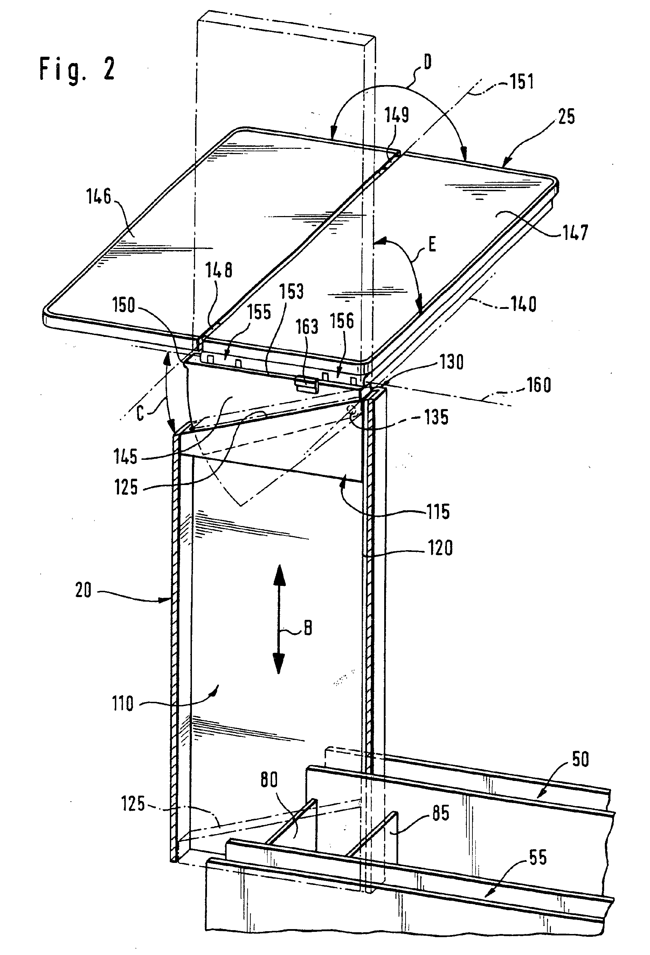

Gemäß der aufgebrochenen Darstellung in Fig. 2 weist das Aufnahmegehäuse 20 einen Führungsschacht 110 auf, der durch die im Querschnitt rechteckige Innenkontur gebildet wird. Dementsprechend ist in dem Führungsschacht 110 ein an dessen Hohlquerschnitt angepaßter Führungsschlitten 115 in Pfeilrichtung B zwischen der liniert dargestellten oberen Endlage und der strichpunktiert angedeuteten unteren Endlage auf und ab bewegbar angeordnet. Die obere Endlage wird mittels einer in eine Führungsleiste 120 integrierte, nicht näher dargestellte Sicherung gegen weiteres Herausfahren des Führungsschlittens 115 gesichert. Die Führung des Führungsschlitten 115 im Führungsschacht 110 erfolgt durch eine Gleitlagerführung, könnte alternativ jedoch auch als Wälzlagerung ausgebildet sein. Charakteristisch für den Führungsschlitten 115 ist eine Abschrägung 125 desselben in seinem oberen Endbereich, die mit einer Abschrägung 130 des Aufnahmegehäuses 20 übereinstimmt. Für die Neigungseinstellung der Plattenanordnung 25 gemäß Pfeil C ist ein Lager 135 mit einer Schwenkachse 140 vorgesehen, um die eine kreissegmentartige Halteplatte 145 geschwenkt werden kann. Die dabei zu erreichende höchste Position ist liniert dargestellt, während die tiefste Position wiederum strichpunktiert angedeutet ist. Für die Fixierung der Halteplatte 145 in ihrer tiefsten Position ist eine Nase 150 außenseitig an der Halteplatte 145 angebracht, die dann auf dem Führungsschlitten 115 aufliegt. Innerhalb des Schwenkbereichs der Plattenanordnung 25 gemäß Pfeilrichtung C kann jede beliebige Schwenkstellung fest eingestellt werden. Diese stufenlose Schwenkeinstellung könnte beispielsweise über eine Feststelleinrichtung durch Reibschluß erfolgen.

Die Plattenanordnung 25 umfaßt zwei in ihren Abmaßen identische Teilplatten 146 und 147, die an ihrer langen Schmalseite über zwei Scharniere 148 und 149 um eine Achse 151 klappbar miteinander verbunden sind. Die Abmaße jeder Teilplatte 146 und 147 sind so gewählt, daß sie die Abmaße des Führungsschachtes 110 nicht überschreiten. Durch die gleichen Abmaße der Teilplatten 146 und 147 läßt sich die Teilplatte 146 deckungsgleich auf die Teilplatte 147 und umgekehrt entsprechend Pfeil D klappen.

An der oberen Randseite 153 der Halteplatte 145 sind zwei Scharniere 155 und 156 befestigt, an der die Plattenanordnung 25 angelenkt ist und die eine Schwenkbewegung der Plattenanordnung 25 um eine Schwenkachse 160 gemäß dem Pfeil E ermöglichen. Sofern also die zwei Teilplatten 146 und 147 aufeinandergeklappt sind, kann die Plattenanordnung 25 somit von ihrer horizontalen liniert dargestellten Gebrauchsstellung in eine vertikale strichpunktiert angedeutete Zwischenstellung geschwenkt und anschließend zusammen mit dem Führungsschlitten 115 im Aufnahmegehäuse versenkt werden. Um ein Kippen der Plattenanordnung 25 über die Zwischenstellung hinaus zu verhindern, ist an der oberen Randseite 153 ein Stopper 163 angebracht.

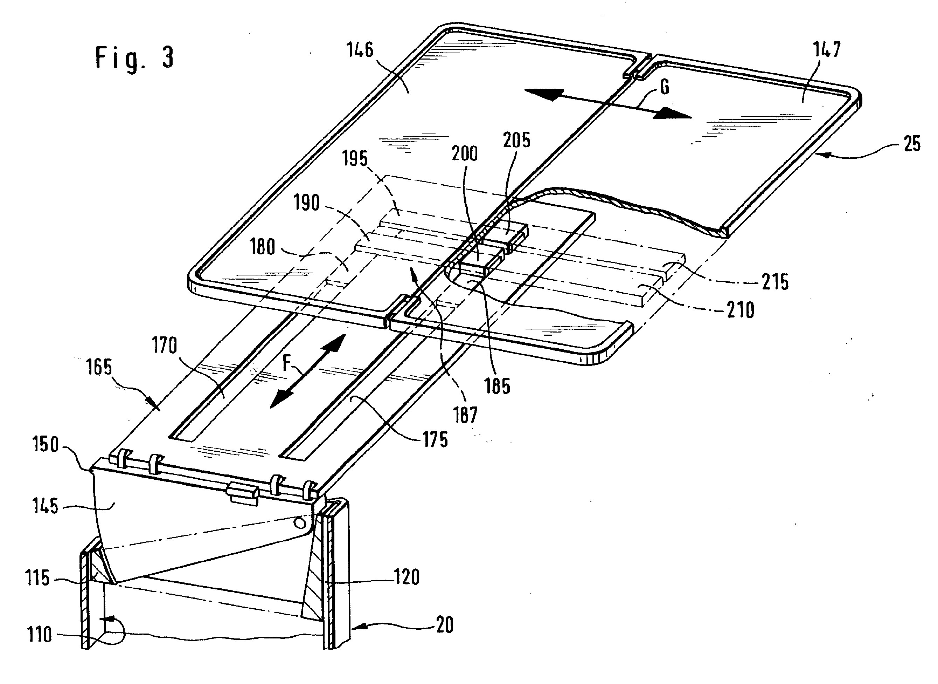

Eine weitere individuelle Einstellung der Klapptischanordnung 10 wird anhand von Fig. 3 näher erläutert. Um vielfältige Positionen der Plattenanordnung 25 bezüglich ihrer Lage zum Sitz bzw. zum Benutzer zuzulassen, sind die Teilplatten 146 und 147 auf einer Tragplatte 165 in der horizontalen Gebrauchsstellung längs und quer zur Tragplatte 165 verschiebbar gelagert. Zur besseren Verdeutlichung ist die Teilplatte 147 aufgebrochen dargestellt.
Die Tragplatte 165 weist zwei Führungsschlitze 170 und 175 auf, in denen jeweils zwei Gleitsteine 180 und 185 eines Schlittens 187 gemäß Pfeil F hin- und hergeführt werden. Die Gleitsteine 180 und 185 sind durch zwei zwischen der Tragplatte 165 und den Teilplatten 146 und 147 angeordnete Profile 190 und 195 miteinander verbunden. Auf jedes Profil 190 und 195 ist ein Gleitstück 200 bzw. 205 befestigt.
Die Gleitstücke 200 und 205 greifen in Führungsnuten 210 bzw. 215 ein, die quer zu den Führungsschlitzen 170 und 175 der Tragplatte 165 an der Unterseite der Teilplatte 147 angeordnet sind. Die miteinander verbundenen Teilplatten 146 und 147 können somit entlang des Pfeils G hin- und herbewegt werden. Im Zusammenwirken beider Bewegungen der Teilplatten 146 und 147 gemäß der Pfeile F und G ist eine Vielzahl von Positionen der Plattenanordnung 25 auf einer parallel zur Tragplatte 165 verlaufenden Ebene einstellbar. Eine entsprechend notwendige Fixierung der Teilplatten 146 und 147 in ihrer gewünschten Lage kann beispielsweise über Reibschluß in den Führungen erfolgen.

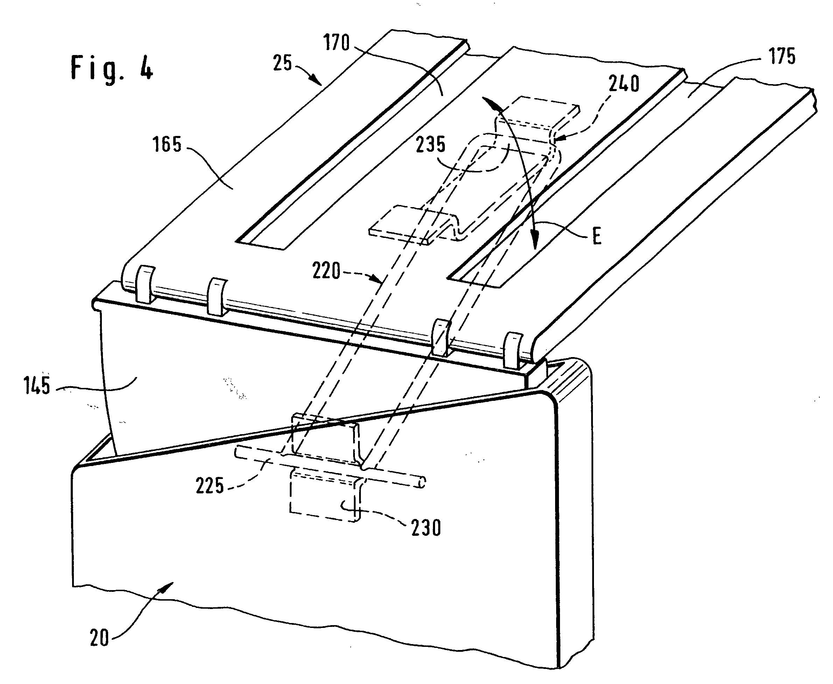

Für die Abstützung der Plattenanordnung 25 in ihrer horizontalen Gebrauchslage ist, wie aus Fig. 4 ersichtlich, ein Haltebügel 220 vorgesehen, der an der Halteplatte 145 angelenkt ist. Dazu wird ein Steg 225 des Haltebügels 220 mit einer Schelle 230 an der Halteplatte 145 befestigt. Das dem Steg 225 gegenüberliegende Ende 235 des Haltebügels 220 wird durch einen Anschlag 240 gehalten, der an der Unterseite der Tragplatte 165 befestigt ist. Gleichzeitig ermöglicht der Anschlag 240 die für die Schwenkbewegung der Plattenanordnung 25 gemäß Pfeil E erforderliche Dreh-Längsbewegung des Haltebügels 220 bezüglich der Plattenanordnung 25.

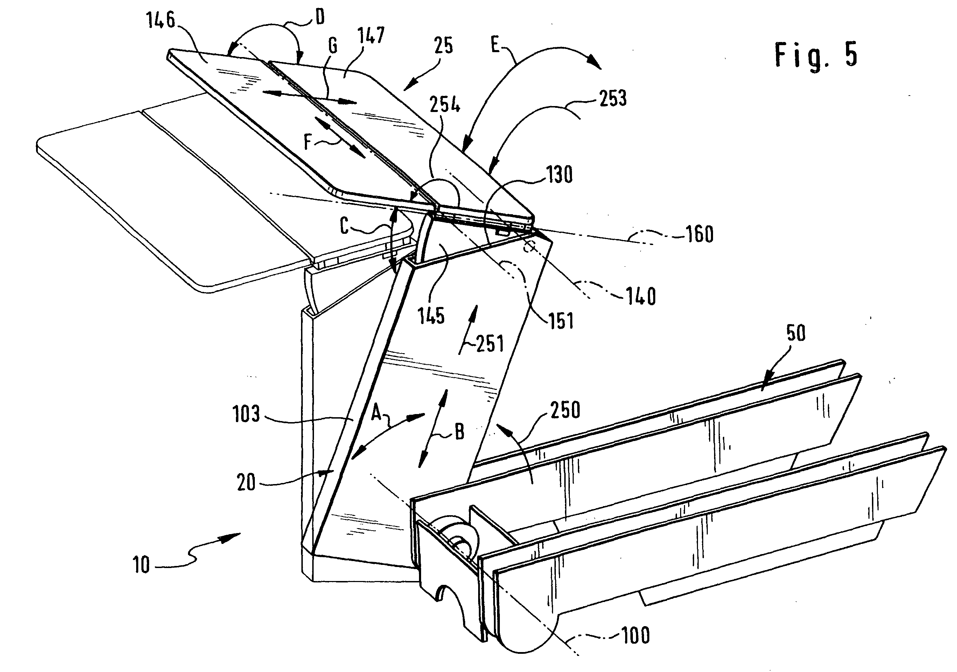

In Fig. 5 soll im folgenden der Bewegungsablauf der Klapptischanordnung 10 nochmals verdeutlicht werden.
In der Ablagestellung des Aufnahmegehäuses 20 in der Kassette 50, wobei die vordere Schmalseite 103 als Armablage dient, läßt sich das Aufnahmegehäuse 20 an den über die Abschrägung 130 des Aufnahmegehäuses 20 herausragenden und aufeinandergeklappten Teilplatten 146 und 147 durch den Benutzer einfach ergreifen und um die Schwenkachse 100 in Pfeilrichtung 250 in die liniert dargestellte Position hochklappen. Danach zieht der Benutzer die sich in dem Aufnahmegehäuse 20 befindenden Teilplatten 146 und 147 nach oben in Pfeilrichtung 251 aus dem Aufnahmegehäuse heraus, bis der an den Teilplatten 146 und 147 angelenkte Führungsschlitten 115 seine obere Endlage erreicht. Die Schwenkachse 160, an der die Plattenanordnung 25 an dem Führungsschlitten 115 angelenkt ist, ist in der oberen Endlage des Führungsschlittens 115 nicht mehr durch den Führungsschacht 110 des Aufnahmegehäuses 20 blockiert, so daß die Plattenanordnung 25 aus ihrer vertikalen Zwischenposition gemäß Pfeil 253 in ihre horizontale Gebrauchsstellung heruntergeklappt werden kann. Nunmehr kann die auf der Teilplatte 147 aufliegende Teilplatte 146 gemäß Pfeil 254 um die Achse 151 aufgeklappt werden, so daß eine ausreichend große Arbeitsfläche für den Benutzer zur Verfügung steht.
Je nach Körperstatur des Benutzers kann dieser die Teilplatten 146 und 147 mehr oder minder zu sich geneigt und benutzernah oder benutzerfern einstellen. Dazu können die Teilplatten 146 und 147 entsprechend den Pfeilen F und G auf der Tragplatte 165 hin und her verschoben werden, so daß innerhalb einer durch die Größe der Tragplatte 165 und der Teilplatte 147 bestimmten Ebene jede gewünschte Lage einstellbar ist. Die schwenkbare Lagerung der Plattenanordnung 25 um die Schwenkachse 140 ermöglicht die Neigungseinstellung entsprechend dem Pfeil C. Dabei ist es für den Benutzer sicherlich hilfreich, daß die Schwenkstellung um die Schwenkachse 100 entsprechend dem Pfeil A an die Neigungseinstellung entsprechend dem Pfeil C an seine Bedürfnisse angepaßt werden kann. Beispielhaft soll dies mit der dünnlinierten Anordnung in Fig. 5 verdeutlicht werden.
Sofern der Benutzer die Plattenanordnung 25 nicht mehr benötigt, muß zunächst die Teilplatte 147 in ihre Ausgangsposition auf der Tragplatte 165 geschoben werden. Danach wird die Teilplatte 146 in umgekehrter Pfeilrichtung 254 auf die Teilplatte 147 geklappt. Entgegen der Pfeilrichtung 253 wird die Plattenanordnung 25 um die Schwenkachse 160 von ihrer horizontalen Gebrauchsstellung in ihre vertikale Zwischenstellung hochgeklappt, so daß der Führungsschlitten 115 samt Plattenanordnung 25 nahezu selbsttätig in das Aufnahmegehäuse 20 entgegen der Pfeilrichtung 251 hinunter gleitet. Das Aufnahmegehäuse 20 läßt sich nun entgegen der Pfeilrichtung 250 in die Ablagestellung in der Kassette 50 herunter klappen und wieder als Armablage nutzen.

## Patentansprüche

1. Klapptischanordnung für Fahrzeuge, insbesondere für Kraftwagen, die einem Fahrzeugsitz zugeordnet ist, mit der Unterbringung einer mindestens eine Tischplatte umfassenden Plattenanordnung in einem seitlich neben dem Fahrzeugsitz angeordneten Aufnahmegehäuse, aus dem jede Tischplatte der Plattenanordnung nach oben herausziehbar und in eine etwa horizontale Gebrauchsstellung herunterklappbar ist, in der die Plattenanordnung durch Stützmittel von dem Aufnahmegehäuse gehalten ist, wobei die Plattenanordnung samt ihrer sie mit dem Aufnahmegehäuse verbindenden Anlenkachse zwischen ihrer herausgezogenen und ihrer eingeschobenen Stellung in einem Führungsschacht des Aufnahmegehäuses schiebegeführt ist,
**dadurch gekennzeichnet,**
**daß** die mitbewegte Anlenkachse (160) der Plattenanordnung (25) an einem im Führungsschacht (110) des Aufnahmegehäuses (20) laufenden Führungsschlitten (115) befestigt ist, der in der Gebrauchsstellung der Plattenanordnung (25) bis in eine obere Endlage im Führungsschacht (110) verschoben ist.

2. Klapptischanordnung nach Anspruch 1,
**dadurch gekennzeichnet,**
**daß** zur Anlenkung der Plattenanordnung (25) am Führungsschlitten (115) mindestens zwei voneinander beabstandete Scharniere (155, 156) vorgesehen sind.

3. Klapptischanordnung nach Anspruch 1,
**dadurch gekennzeichnet,**
**daß** die Plattenanordnung (25) über eine Tragplatte (165) am Führungsschlitten (115) angelenkt ist, auf der jede Tischplatte (146, 147) der Plattenanordnung (25) in einer zur Tragplatte (165) etwa parallelen Ebene verschiebbar gelagert ist.

4. Klapptischanordnung nach Anspruch 3,
**dadurch gekennzeichnet,**
**daß** die Plattenanordnung (25) über einen Schlitten (187) in Längsrichtung der Tragplatte (165) verschiebebeweglich auf dieser gelagert ist und quer dazu eine weitere Schiebeführung vorgesehen ist.

5. Klapptischanordnung nach Anspruch 4,
**dadurch gekennzeichnet,**
**daß** die Plattenanordnung (25) eine zweiteilige Tischplatte umfaßt, deren längliche Teilplatten (146, 147) im wesentlichen die gleiche Größe aufweisen und entlang ihrer langen Schmalseite gelenkig miteinander verbunden sind, wodurch sie vorm Einschieben in den Führungsschacht (110) raumsparend aufeinanderklappbar sind.

6. Klapptischanordnung nach Anspruch 1,
**dadurch gekennzeichnet,**
**daß** die Plattenanordnung (25) in ihrer Gebrauchsstellung neigungseinstellbar ist.

7. Klapptischanordnung nach Anspruch 6,
**dadurch gekennzeichnet,**
**daß** für die Neigungsstellung an dem Führungsschlitten (115) eine segmentartige Halteplatte (145) schwenkbar gelagert ist, deren Schwenkstellungen über einen vorgesehenen Einstellbereich fixierbar sind, wobei die Tragplatte (165) an der oberen Randseite (153) der Halteplatte (145) angelenkt ist.

8. Klapptischanordnung nach Anspruch 7,
**dadurch gekennzeichnet,**
**daß** der obere Endbereich des Aufnahmegehäuses (20) unter Anpassung an die mögliche Neigung der Halteplatte (145) abgeschrägt ist.

9. Klapptischanordnung nach Anspruch 1,
**dadurch gekennzeichnet,**
**daß** als Stützmittel ein Haltebügel (220) vorgesehen ist, der an dem Führungsschlitten (115) angelenkt ist und in der Gebrauchsstellung an einem Anschlag (240) der Plattenanordnung (25) abgestützt ist.

10. Klapptischanordnung nach Anspruch 1,
**dadurch gekennzeichnet,**
**daß** das Aufnahmegehäuse (20) um eine quer zu seiner Breitseite verlaufenden Schwenkachse (100) in eine abgesenkte Ablagestellung herunterklappbar ist.

11. Klapptischanordnung nach Anspruch 10,
**dadurch gekennzeichnet,**
**daß** die bei heruntergeklappten Aufnahmegehäuse (20) nach oben gewandte Schmalseite desselben als Armauflage nutzbar ist.

12. Klapptischanordnung nach Anspruch 11,
**dadurch gekennzeichnet,**
**daß** Schwenkstellungen des Aufnahmegehäuses (20) in einem vorgesehenen Einstellbereich fixierbar sind.
